# EUROPEAN PATENT APPLICATION

(11) **EP 4 064 695 A1**
(43) Date of publication of application: **28.09.2022**
(21) Application number: 21163989.3
(22) Date of filing: 22.03.2021
(51) Int. Cl.: H04N 7/18, H04N 7/14, H04N 21/239

(54) **MONITORING SYSTEM**

(71) Applicant: Koninklijke Philips N.V., 5656 AG Eindhoven (NL)
(72) Inventor: BURGHOORN, Anne Wil, 5656 AE Eindhoven (NL); ROIJAKKERS, Iris, 5656 AE Eindhoven (NL); NIEMANTSVERDRIET, Karin, 5656 AE Eindhoven (NL); BUIL, Vincentius Paulus, 5656 AE Eindhoven (NL)
(74) Representative: Philips Intellectual Property & Standards

(57) **Abstract**

A control system is provided for controlling communication between a monitor unit and a set of remote user units. A monitoring system including the control system, the monitor unit and optionally the remote user units is also provided. The monitor unit comprises a camera for collecting images of a subject being monitored and/or a microphone for collecting sounds of the subject being monitored. The control system is adapted to grant different access rights to different users, including at least: first access rights for a first remote user or first set of remote users over the Internet for accessing the collected images and/or collected sounds; and second, different, access rights for a second remote user or second set of remote users over the Internet for accessing the collected images and/or collected sounds. The system is for example for baby monitoring. In this way, a parent (or other primary care giver) can share their baby experiences with family and friends in a way which is most appropriate for each different type of family member or acquaintance of the baby.

## Description

### FIELD OF THE INVENTION

This invention relates to monitor systems, in particular having relay of audio and/or video between a monitor unit and a remote receiver unit, as well as relay of at least audio back from the receiver unit to the monitor unit. The invention is for example of interest for baby monitoring systems, in which the monitor unit is a baby unit and the remote receiver unit is a parent unit.

### BACKGROUND OF THE INVENTION

A conventional video baby monitoring system consists of a baby unit (the monitor unit) which captures the activities of a baby and a parent unit (the receiver unit) that displays the captured video and plays the captured audio. Parents use the system to monitor their baby in a remote room. For the purposes of this text, the monitor unit may be considered to be at a primary location, and the parent unit may be considered to be a remote unit, since it enables monitoring of the baby from a location remote from the baby.

In an audio only system, the baby unit has a microphone and the parent unit has a speaker. In a video system, at least the baby unit also has a camera and the parent unit has a display. This invention may be applied to either type of system.

A standard type of monitor system is not able to connect to the Internet, which limits the usage scenarios. There have however been existing monitor systems which can connect to the Internet, for example to enable monitoring by a parent who is away from home, even though there is a babysitter at home looking after the baby.

The birth of a baby is a moment rich in human connection. Family members and friends welcome the baby into the world in ways that are characterized by physical closeness; the relationship develops through touch, voices, and smells.

Of course, many friends and family members may live far from a baby with whom they have a connection. With COVID-19 forcing people to be physically distant even when they live close by, this precious maternity period is being disrupted with potential longer lasting impact on the relationship between a newborn child and their social circle.

During the COVID-19 pandemic, physical contact between babies and their loved ones became disrupted. Family and friends could not visit the baby physically, which hindered relationship building. They had to rely on alternatives like window visits and updates from the parents on social media and in messaging applications. These alternatives, however, have big disadvantages for this relationship building. Window visits are short moments in time, are lacking in rich contact, and are not possible in every living situation. The same holds for video calling applications like FaceTime, that require full attention from parents and loved ones during momentarily synchronous communication.

Updates from parents in messaging application like WhatsApp can only take place through the parents, which makes it more difficult for loved ones to take the initiative and to connect directly to the baby. Lastly, more general updates that can be accessed by loved ones on their own terms (e.g., on social media like Facebook or Instagram) are generally too public. As a result, these posts are highly curated and do not have the level of intimacy that closer loved ones are looking for.

This invention aims to facilitate relationship building even while being distant, based on extending the functionality of a monitor system, such as a baby monitoring system. In particular, there is a need for relationship building particularly with newborns, that is based on un-scripted, continuous, two-way interaction.

### SUMMARY OF THE INVENTION

The invention is defined by the claims.

According to examples in accordance with a first aspect, there is provided a control system for controlling communication between a monitor unit and a set of remote user units, wherein the monitor unit comprises a camera for collecting images of a subject being monitored and/or a microphone for collecting sounds of the subject being monitored, wherein the control system is adapted to grant different access rights to different users, including at least:
first access rights for a first remote user or first set of remote users over the Internet for accessing the collected images and/or collected sounds; and
second, different, access rights for a second remote user or second set of remote users over the Internet for accessing the collected images and/or collected sounds.

It is noted that "collecting images" refers to the collection of static images and/or or video streams.

The subject is typically a baby, and the access rights are set by the primary care givers of the baby, typically the parents. The care givers have control over the sharing of data (sounds and/or images), but the access rights for example enable loved ones to take the initiative themselves on what content they would like to access and when. The control system extends the functionality of the monitor unit such that it is used for remote communication purposes, and with control over the level and type of communication for different remote users.

Although baby monitors with connection to the Internet are already known, the previous aim has been to obtain practical benefits of this connectivity, namely extending the range of contact for parents that are away from home.

The different access rights implemented by the invention are for example for family or friends. By also allowing family and friends to connect to the monitor unit, and access collected sounds and/or images (live or recorded), they can remotely experience more spontaneous unscripted contact with the subject. The remote uses may be able (depending on their access rights) to interact with the subject (e.g. baby) on their own initiative, by initiating playback of prerecorded audio and/or video, or via live audio and/or video communication. However, the invention enables different access restrictions to be set for different people or groups of people. This provides a smart curation of input and output channels by the parents as a part of the repurposing of the monitors unit for communication with an extended group of loved ones.

The invention may be applied to an audio only system or to an audiovisual system.

The first access rights may be for the primary care giver of the subject and the second access rights may be for a loved-one of the subject but not a primary care giver.

The first access rights for example apply to the parents, for whom there will likely be no restrictions at all (although as mentioned below, there may still be restrictions on delivering audio, e.g. when the baby is sleeping). The second access rights may apply to friends or relatives, and there will be some restrictions either in access times, or depending on the activity of the subject.

The control system may be adapted to grant third access rights to a third remote user or third set of remote users over the Internet for accessing the collected images and/or collected sounds, wherein the second access rights are for a primary loved one and the third access rights are for a secondary loved one. Thus, there may be different levels of access rights for different groups of family or friends.

There may be any number of groups of remote units of different categories, e.g. for primary care givers, near loved ones, distant loved ones, friends, acquaintances, etc. each with different sets of access rights. Each group may comprise one or more individuals.

Detailed settings of permissions for loved ones may in this way be implemented based on the 'social circles' concept. The primary care givers (parents) can assign people to a social circle, being closer or further away from the subject (baby), and can set individual permissions for each of the circles. For example, the closest circle, i.e. the primary loved one, may be for grandparents and they may have full access to the live feed of the baby unit during bed-time moments, while the second circle, i.e. the secondary loved one, may be for close friends and they may only see pre-recorded content.

One of the access rights for example allows access to the collected images and collected sounds at all times and another of the access rights allows access to the collected images and collected sounds only at certain times including at bed-time.

Thus, access rights may be more restricted based on time constraints.

At least one of the access rights may allow delivery of sounds and optionally also images from the corresponding remote user to the monitor unit.

In this way, the remote users (if they have the correct access rights) can share their sounds (and optionally images, if the monitor unit has a display) directly with the subject, making a more active interaction between the subject and the remote user. For example, the second access rights may give rights to upload e.g. lullabies directly to the monitor unit, whereas lower level third access rights may not have such music upload access rights.

The control system may comprise an input for receiving notifications of events or emotions or activity types or physiological parameters relating to the subject being monitored, wherein the control system is adapted to dynamically control access to the collected images and/or collected sounds in dependence on the notifications. This enables access rights to be configured dynamically in response to events or activities of the subject. The dynamic access management may relate to the allowing access to the collected images and/or sounds at the monitor unit, as well as the delivery of sound and/or images to the subject from the remote units. The possibility to open a live communication channel from the monitor unit to a remote unit may be dynamically controlled.

By way of example, at least one of the access rights may prevent:
access to the collected images and collected sounds during breast feeding times; or
access to the collected images and collected sounds when the subject is crying; or
access to the collected images and collected sounds when the subject is being changed or bathed; or
delivery of audio content to the monitor unit when the subject is sleeping.

These are just some examples of possible restrictions.

Smart video and audio analysis may be used to exclude certain moments from the live-feed and from baby unit recordings. This analysis might be used to detect when the baby is crying, when the mother is breastfeeding, or when undressing the baby and changing diapers, and restrict permission to a live-feed in those moments. There may be sleep detection, and access may be restricted to the speakers of the monitor unit for loved ones at these times, so they cannot wake the baby.

These notifications may be based on the use of additional sensors, rather than only using analysis of audio and/or video. Physiological parameters of the subject may be monitored for example using a baby activity bracelet or a smart mattress.

One of the access rights may allow access to only recorded collected images and/or collected sounds. Thus, this user has more limited options for interacting with the subject but may instead view or listen to selected recordings.

The invention also provides a monitoring system, comprising
a monitor unit comprising:
a microphone for collecting sounds of the subject being monitored;
optionally a camera for collecting images of a subject being monitored;
a communications module for connecting to the Internet; and
a speaker for outputting received sounds received over the Internet; and
the control system as defined above.

This defines the combination of the monitor unit and the control system. The monitor unit is for at least audio recording, and optionally also for video and photo recording, for live feeds, and sharing audio files (e.g., lullabies sang by grandmother) directly with the subject (e.g. baby), who becomes acquainted with the voices of loved ones, even when they are remote.

The monitor unit may further comprise a display for displaying received images received over the Internet. Thus, video content may be delivered to the subject, either live (similar to a video call) or as a recording. This may for example enable a grandparent to have more meaningful two-way interaction with a baby.

The monitor unit may further comprise a recorder for recording audio and images of the subject. A recording controller may be provided for controlling the recorder in response to detected characteristics of the collected images and/or collected sounds and/or in response to sensed events, activities or emotions of the subjects using additional sensors such as activity trackers, a smart mattress, vital sign sensors, emotion sensors, etc. The controller may for example set timings at which recording can start and stop.

Smart video and audio analysis may for example be used to record precious moments to capture for later posting by the parents. For example, the baby unit might detect and record first words uttered by the baby in bed, first time movements (e.g., rolling, standing up), or moments when the baby is playing in the night although parents think the baby is sleeping. These moments can include precious memories for the parents that would have otherwise been missed.

The monitoring system for example comprises a baby monitoring system.

The monitoring system may further comprise:
first software for configuring a first receiving unit of a remote first user with first access rights; and
second software for configuring a second receiving unit of a remote second user with second access rights.

This defines the overall system. It is for example implemented by a parent application which enables the parent to configure the monitor unit, and set the access rights for different users. The parent application may also enable the parents to use the monitor unit to capture and store precious moments, and curate content to and from the baby to loved ones.

The first and second software for example comprise apps to be loaded onto remote devices such as mobile phones or tablets, and they are for loved ones with different access rights, whereby the loved ones can see precious moments from the subject (baby) at their own initiative, tune in on the live feed to be part of spontaneous moments (if the access rights permit), upload personal audio messages (voice messages, lullabies) for the subject (if the access rights permit) and optionally upload personal video message for the subject (if the access rights permit).

There is thereby a differentiation between a main caregiver (e.g. parent) application and the secondary loved-ones applications. All permissions for the loved ones can be controlled in detail by the caregivers (parents).

The invention also provides a computer-implemented method of controlling communication between a monitor unit and a set of remote user units, wherein the monitor unit comprises a camera for collecting images of a subject being monitored and/or a microphone for collecting sounds of the subject being monitored, the method comprising configuring the monitor unit to grant different access rights to different users, including at least:
first access rights for a first remote user or first set of remote users over the Internet for accessing the collected images and/or collected sounds; and
second, different, access rights for a second remote user or second set of remote users over the Internet for accessing the collected images and/or collected sounds.

This is the method implemented by the control system defined above.

The method may further comprise:
configuring a first receiving unit of a remote first user with first access rights; and
configuring a second receiving unit of a remote second user with second access rights.

A computer program is also provided comprising computer program code means which is adapted, when run on a processor of a monitor unit and/or of receiving units, to implement the methods defined above.

These and other aspects of the invention will be apparent from and elucidated with reference to the embodiment(s) described hereinafter.

### BRIEF DESCRIPTION OF THE DRAWINGS

For a better understanding of the invention, and to show more clearly how it may be carried into effect, reference will now be made, by way of example only, to the accompanying drawings, in which:
Figure 1 shows a baby video monitor system to which the invention may be applied; and
Figure 2 shows a monitor system in accordance with the invention.

### DETAILED DESCRIPTION OF THE EMBODIMENTS

The invention will be described with reference to the Figures.

It should be understood that the detailed description and specific examples, while indicating exemplary embodiments of the apparatus, systems and methods, are intended for purposes of illustration only and are not intended to limit the scope of the invention. These and other features, aspects, and advantages of the apparatus, systems and methods of the present invention will become better understood from the following description, appended claims, and accompanying drawings. It should be understood that the Figures are merely schematic and are not drawn to scale. It should also be understood that the same reference numerals are used throughout the Figures to indicate the same or similar parts.

The invention provides a control system for controlling communication between a monitor unit and a set of remote user units, as well as a monitoring system including the control system, the monitor unit and optionally the remote user units. The monitor unit comprises a camera for collecting images of a subject being monitored and/or a microphone for collecting sounds of the subject being monitored. The control system is adapted to grant different access rights to different users, including at least: first access rights for a first remote user or first set of remote users over the Internet for accessing the collected images and/or collected sounds; and second, different, access rights for a second remote user or second set of remote users over the Internet for accessing the collected images and/or collected sounds.

The system is for example for baby monitoring. In this way, a parent (or other primary care giver) can share their baby's experiences with family and friends in a way which is most appropriate for each different type of family member or acquaintance of the baby.

The invention will be explained with reference to a baby monitor system. Thus, the "subject" to be monitored will be assumed to be a baby and the "care giver" will be assumed to be the parents. Thus, the monitor unit is a baby unit and a primary remote user receiving unit of the care giver is a parent unit. The invention is also described in connection with a video and audio system, but the same principles may be applied to an audio only system.

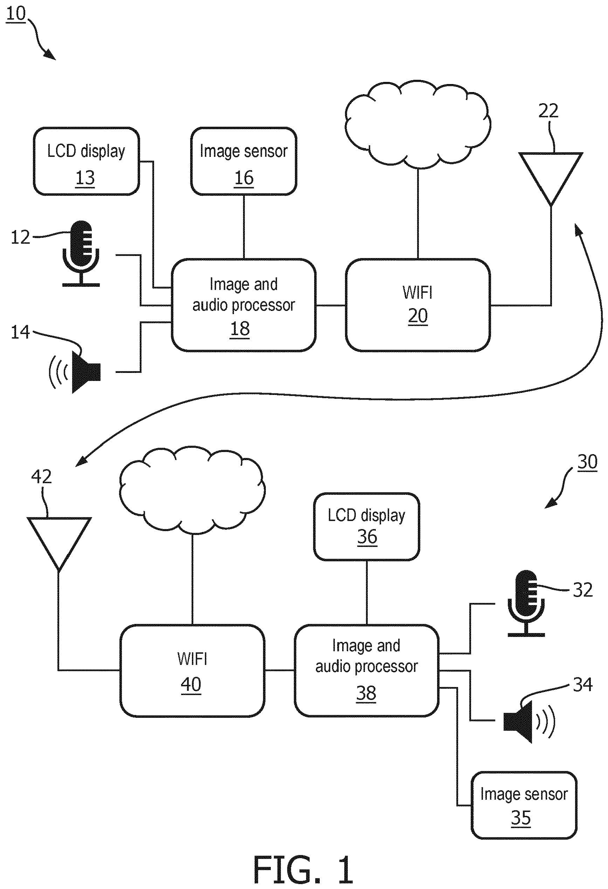

Figure 1 shows an Internet enabled baby video monitor system to which the invention may be applied, comprising a baby unit, and a parent unit 30. The parent unit may be considered to be a receiving unit because the primary purpose is to receive and output images and sound from the baby unit. However, the system typically allows two way audio communication, so that the parent unit can also be used to transmit at least audio (and optionally also video) to the baby unit. Thus, the term "receiving unit" is used for convenience only, and does not exclude that the parent unit can also be used as a transmitter.

The baby unit 10 comprises a microphone 12, an optional display 13, a speaker 14, an image sensor 16 (e.g. a digital camera), and an image and audio processor 18. The microphone and image sensor are examples of input device. The baby unit also includes an output device in the form of the speaker 14 and optional display 13. The processed image and audio is transmitted by a transceiver 20 which includes a WiFi connection capability.

There may additionally be direct communication between the monitor unit and the parent unit for example based on a frequency hopping spread spectrum (FHSS) modulation. The modulated signal may then be transmitted directly on the 2.4GHz band using antenna 22.

The parent unit 30 comprises a microphone 32, a speaker 34, a display 36 (e.g. a LCD screen), and an image and audio processor 38. The speaker and display are examples of output device. The parent unit unit also includes an input device in the form of the microphone 32 and also an optional image sensor 35.

The processed image and audio from the monitor unit 10 is received by transceiver 40 which again includes WiFi connection capability. The data may optionally instead be received at antenna 42 in which case the transceiver 40 implements a frequency hopping spread spectrum (FHSS) demodulation.

The parent unit is typically battery operated, although it typically also has an interface to allow connection to the mains for operation from the mains and for recharging.

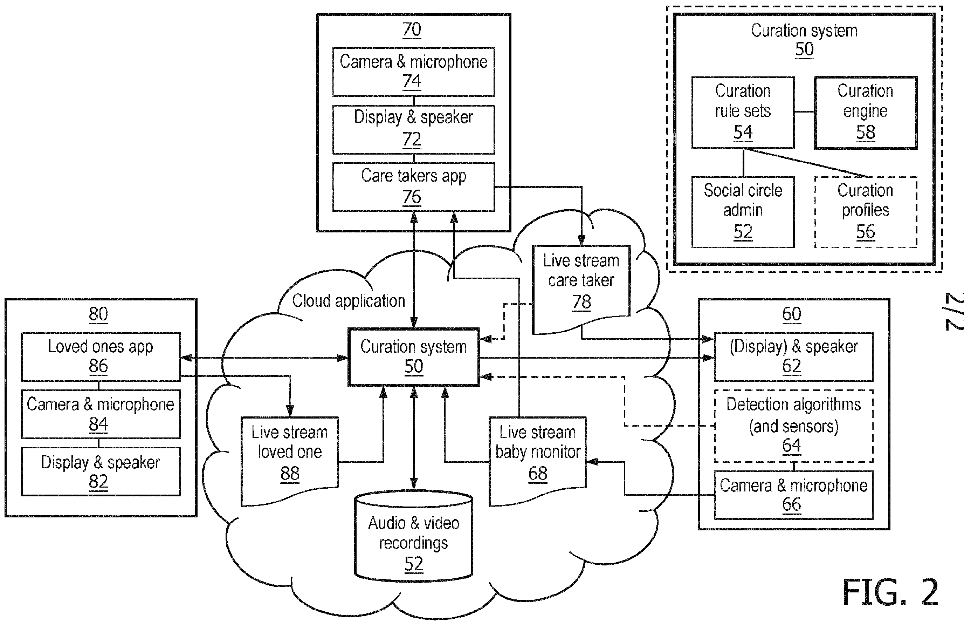

Figure 2 shows the overall system of the invention.

The system is shown with three types of (terminal) devices, each with their own applications, interacting with a central control system 50 (called a curation system) in the cloud. Thus, each terminal devices has connectivity to the Internet, typically using a WiFi connection to a local network, e.g. in the home of the parents and loved ones.

The three terminal devices are a connected monitor unit, i.e. the baby unit 60, a mobile device 70 of a care giver, i.e. the parent unit, and a mobile device 80 of a loved one. The parent unit may be considered to be a first remote unit, and the mobile device of the loved one is a second remote user.

The baby unit 60 comprises an output system 62 of a speaker and optionally a display, detection sensors and algorithms 64, and an input system 66 of a camera and microphone. The baby unit generates a live video and audio stream 68. The live stream is for example directly fed to the parent unit 70 but access is controlled by the control system for the other terminal devices.

The parent unit 70 also comprises an output system 72 of a speaker and a display, an input system 74 of a camera and microphone and a software parent app 76 which allows the user of the parent unit to set the access rights for all other devices (and optionally for itself as well) based on dialogue with the control system 50. The parent unit generates a live video and audio stream 78.

The loved one device 80 also comprises an output system 82 of a speaker and a display, an input system 84 of a camera and microphone and a software app 86 which determines the access rights granted to the device 80 by the control system 50. The loved one device 80 generates a live video and audio stream 88.

Most of the interaction between the terminal devices is governed by the control system 50. The control system 50 determines what information is exchanged between the three types of device.

As shown in Figure 2, the control system 50 may be considered to include the following functional units:
A social circle administration unit 52 which unit stores the identities of the loved ones and parents that are allowed to interact with the baby unit 60.

A curation rule setting unit 54 which contains the rules set by the parents, on what (type) of engagements each (type of) loved one may have with the baby monitor, thereby determining access rights for those remote users in respect of the audio and images (video) collected by the microphone and camera of input unit 66 of the baby unit, and well as access rights for delivering content to the baby unit.

The access rights may also be specified for various situations that may be detected via the sensors and/or detection algorithms 64. Examples of connected sensors are for example localization sensing using WiFi, or presence/activity sensing via a pressure mat in the cot or crib.

Examples of detection algorithms are audio/video based detection of activity levels, sleep states and emotion, as well as naked/dressed status recognition. The system may use sensors and detection algorithms in the baby unit 60 or the parent unit 70, or around the home to derive extra contextual awareness input.

The control system 50 optionally also comprises a set of curation profiles 56 which define a set of default rule settings (defining different access rights) for specific levels of engagement, aimed at various degrees of closeness of certain loved ones.

The control system also comprises a curation engine 58, which is the main processor of the control system for executing the curation rules, thereby to control the passing through of live streams and/or facilitate audio video recording or playback between the various types of terminal device.

The control system as a whole uses the identity or type (if users are allocated a type of access rather than being individually identified) of the loved one, in combination with rules as set by the parents, possibly in combination with input from the detection algorithms (and sensors) of the baby unit, parent unit, or other sensors or devices.

A primary function of the control system is to determine if and when a live stream from the baby monitor (and optionally a live stream from the parents) is available to the specific loved one or to a particular classification of loved one. Thus, the control system sets access rights for a remote user which relate to the ability to access the collected images and/or collected sounds at the baby unit, such as a live feed of images (video) and sound.

There are secondary functions relating to access rights for stored images or sounds and for delivery of content to the baby unit. The control system for example also determines if and when the live stream from the baby unit (and optionally from the parent unit) should be recorded, for example automatically when certain events are detected by the detection algorithms 64.

The access rights set by the control system then determine those recordings that are made available to specific loved ones or types of loved one.

The control system will also determine, by means of the access rights, when a live feed from the loved one is allowed to be passed through to the baby unit (i.e. data communication from the loved one unit to the baby unit), and the times at which selected recordings from a specific loved one or classification of loved ones are passed through to the baby unit. Again, this may be linked to events detected by the detection algorithms.

Table 1 below shows an example of a rule set defining when inner and outer circle loved ones can access the live video and audio stream from the baby unit, and when they can do a live video call through to the baby unit. Inner circle loved ones may for example be grandparents and brothers and sisters of the parents, whereas outer circle loved ones could be aunts and uncles and friends.

Note that all conditions in a column need to be met to allow the functionality (i.e. viewing the live stream or initiating a video call).

**Table 1**

| | Can view baby unit live stream | | Can do video call via baby unit | |
|---|---|---|---|---|
| **Baby event status** | **Inner circle loved ones** | **Outer circle loved ones** | **Inner circle loved ones** | **Outer circle loved ones** |
| Asleep / awake | Doesn't matter | Only when awake | Only when awake | Only after explicit parent approval |
| Emotions | Only when not sad | Only when not sad | Only when not sad | Only after explicit parent approval |
| Naked / dressed | Only when dressed | Only when dressed | Only when dressed | Only after explicit parent approval |
| Location | Doesn't matter | Only when in living room | Only when in living room | Only after explicit parent approval |
| Feeding | Only when not feeding | Only when not feeding | Only when not feeding | Only after explicit parent approval |
| Time | Not at night time | Only during the day | Only in the afternoon | Only after explicit parent approval |

As shown in Table 1, access rights may be based on one or more of:
sleep status of the baby;
mood of the baby;
dressing or feeding status of the baby;
location of the baby;
time of day;
specific parent approval.

The curation rules which implement the access rights can be manually set by the parents. Alternatively, the curation rules may also be learned from in-the-moment manual interactions with the curation by the parents. For example, when the parent switches on the live stream or records when the baby is laughing a repeated number of times, the control system may ask if it should always do this when laughter is detected.

The parent app 76 provides various functions in addition to setting (in dialogue with the control system 50) access rights of other users.

The parent app 76 for example enables an album to be created, so that special moments of the baby can be re-lived in future, organized by data relating to those events. New images and videos can be uploaded from albums on a parent's phone or can directly be captured by the baby unit. The baby unit can also be put to automatic mode, which makes it capture relevant moments automatically (using video and audio interpretation software), so special moments of the child development are not missed, even when they happen in the middle of the night.

The parent app 76 may have a simple intuitive control to turn the live feed on or off. This is used to control manually when people in the baby's social circle can in real-time see how the baby is doing. The live feed shows real-time audio and video from the baby unit and can be used continuously, or only at special moments such as bedtime or while waking up.

The parent app 76 also allows the parent to see who else is watching the live feed at any time.

A sound and/or video library may also be created, whereby tunes sent in by the baby's social circle are shown and can be selected. This may include content created by the social circle, such as a bedtime story from grandpa, a lullaby sang by auntie, or a wish from a godmother. The content is stored in database 52 in the cloud and can be played from the parent device 70 or directly from the baby unit 60. All recently added content e.g. tunes can be inspected and saved for the future (favorites), played, removed, or uploaded to the baby unit. This ensures easy access during bed-time moments.

Additional users, i.e. additional loved ones, can be added to the social circle, thereby defining who is in the baby's social circle. New loved ones can be invited and their access rights can be chosen.

To set the access rights for a particular social circle layer, a simple graphic interface may illustrate the closeness of the relationship as a radial distance from a representation of the baby, and different radial distances then have different permission levels. The permissions give or restrict access to specific features as explained above, such as the live feed, the creation of tunes, or videos on the baby feed.

The loved ones app 86 enables the viewing of a live feed (when access is permitted) as well as viewing the video and audio library, to re-live saved shared moments of the baby whenever desired. Favorite moments may be saved and audio and optionally also video messages may be recorded for the baby.

The overall system thus combines a baby unit (generally a monitor unit), a control system 50, first software for configuring a first receiving unit of a remote first user with first access rights, e.g. the parent app 76 with full access rights, and at least second software for configuring a second receiving unit of a remote second user with second access rights, e.g. the loved one app 86.

The example above shows the control system implemented in the cloud, i.e. in a processing unit which is remote from the baby unit or the parent unit. However, some of the computing functions may be provided at the parent unit or indeed at the baby unit Thus, the specific implementation of the control software may be achieved made in various ways.

As is clear from the description above, the main application of the invention is for a baby monitor system with a baby unit and a parent unit. Baby monitors are often used up to the age of 4 or 5, and the use of the application is suitable for this same period. Thus, reference to a baby unit should be taken to include infants and toddlers.

The invention may instead be used for other subject such as vulnerable people (the elderly or people with Alzheimer's disease). Thus, the invention relates more generally to a monitor system. By this is meant that the system is for monitoring an individual needing care from a carer (such as a parent or a medical professional), and in particular for whom remote monitoring is desirable when they are left alone, e.g. in a cot or crib or in a bed in a care home or in a hospital.

As mentioned above, the invention may be applied to an audio only system. The access rights will then determine when loved ones can listen in, for example when the baby is not crying, or avoiding times of other activities.

The monitor unit can for example play back recorded video and/or audio or else facilitate direct audio and/or video communication between the monitor unit and the remote user units.

As mentioned above, there may be a live feed of audio and/or video, and there may also be the option for the supply of recorded audio and/or video. A loved one (e.g. grandmother) may for example deliver recorded content e.g. a lullaby, but may also be able to see the reaction of the baby when the system or parents decide to play the lullaby. Viewing the reaction may be via a live feed or via a recording. The grandmother may for example receive a notification to follow the moment live, or the reaction may be recorded for the grandmother to see later.

As such, there is the option for asynchronous communication in one direction, and synchronous communication in the other direction, or synchronous communication in both directions, or asynchronous communication in both directions.

If there are multiple remote users wishing to have a two-way interaction via a live feed (rather than just viewing a live feed), a mechanism may be provided to allow for fair sharing of live access moments between loved ones. In this way, live interaction slots may be shared for example via some form of reservation system or an automatic fair slot allocation system.

Variations to the disclosed embodiments can be understood and effected by those skilled in the art in practicing the claimed invention, from a study of the drawings, the disclosure and the appended claims. In the claims, the word "comprising" does not exclude other elements or steps, and the indefinite article "a" or "an" does not exclude a plurality.

A single processor or other unit may fulfill the functions of several items recited in the claims.

The mere fact that certain measures are recited in mutually different dependent claims does not indicate that a combination of these measures cannot be used to advantage.

A computer program may be stored/distributed on a suitable medium, such as an optical storage medium or a solid-state medium supplied together with or as part of other hardware, but may also be distributed in other forms, such as via the Internet or other wired or wireless telecommunication systems.

If the term "adapted to" is used in the claims or description, it is noted the term "adapted to" is intended to be equivalent to the term "configured to".

Any reference signs in the claims should not be construed as limiting the scope.

## Claims

1. A control system (50) for controlling communication between a monitor unit (60) and a set of remote user units (70,80), wherein the monitor unit (60) comprises a camera (66) for collecting images of a subject being monitored and/or a microphone (66) for collecting sounds of the subject being monitored, wherein the control system (50) is adapted to grant different access rights to different users, including at least:
first access rights for a first remote user (70) or first set of remote users over the Internet for accessing the collected images and/or collected sounds; and
second, different, access rights for a second remote user (80) or second set of remote users over the Internet for accessing the collected images and/or collected sounds.

2. The control system of claim 1, wherein the first access rights are for a primary care giver of the subject and the second access rights are for a loved-one of the subject but not a primary care giver.

3. The control system of claim 2, wherein the control system is adapted to grant third access rights to a third remote user or third set of remote users over the Internet for accessing the collected images and/or collected sounds, wherein the second access rights are for a primary loved one and the third access rights are for a secondary loved one.

4. The control system of any one of claims 1 to 3, wherein one of the access rights allows access to the collected images and/or collected sounds at all times and another of the access rights allows access to the collected images and/or collected sounds only at certain times including at bed-time.

5. The control system of any one of claims 1 to 4, wherein at least one of the access rights allows delivery of sounds and optionally also images from the corresponding remote user to the monitor unit.

6. The control system of any one of claims 1 to 5, comprising an input for receiving notifications of events or emotions or activity types or physiological parameters relating to the subject being monitored, wherein the control system is adapted to dynamically control access to the collected images and/or collected sounds in dependence on the notifications.

7. A monitoring system, comprising
a monitor unit (60) comprising:
a microphone (66) for collecting sounds of the subject being monitored;
optionally, a camera (66) for collecting images of a subject being monitored;
a communications module for connecting to the Internet; and
a speaker (62) for outputting received sounds received over the Internet; and the control system of any one of claims 1 to 6.

8. The monitoring system of claim 7, wherein the monitor unit (60) further comprises a display (62) for displaying received images received over the Internet.

9. The monitoring system of claim 7 or 8, wherein the monitor unit further comprises a recorder for recording audio and/or images of the subject.

10. The monitoring system of claim 9, wherein the monitor unit further comprises a recording controller for controlling the recorder in response to:
detected characteristics of the collected images or collected sounds; and/or
sensed events, activities or emotions of the subject being monitored.

11. The monitoring system of any one of claims 7 to 10, wherein the monitoring system comprises a baby monitor system.

12. The monitoring system of any one of claims 7 to 11, further comprising:
first software for configuring a first receiving unit of a remote first user with first access rights; and
second software for configuring a second receiving unit of a remote second user with second access rights.

13. A computer-implemented method of controlling communication between a monitor unit and a set of remote user units, wherein the monitor unit comprises a camera for collecting images of a subject being monitored and/or a microphone for collecting sounds of the subject being monitored, the method comprising configuring the monitor unit to grant different access rights to different users, including at least:
first access rights for a first remote user or first set of remote users over the Internet for accessing the collected images and/or collected sounds; and
second, different, access rights for a second remote user or second set of remote users over the Internet for accessing the collected images and/or collected sounds.

14. The method of claim 13, further comprising:
configuring a first receiving unit of a remote first user with first access rights; and
configuring a second receiving unit of a remote second user with second access rights.

15. A computer program comprising computer program code means which is adapted, when run on a processor of a monitor unit and/or of receiving units, to implement the method of claim 13 or 14.
